# EUROPEAN PATENT APPLICATION

(11) **EP 2 800 385 A1**
(43) Date of publication of application: **05.11.2014**
(21) Application number: 12862516.7
(22) Date of filing: 10.12.2012
(51) Int. Cl.: H04N 13/02, G03B 35/08, G03B 35/18, H04N 5/225, H04N 5/91, H04N 5/92, H04N 13/04

(54) **VISUAL DISPARITY ADJUSTING APPARATUS, IMAGE PROCESSING APPARATUS, AND FRAME FORMAT**

(30) Priority: 28.12.2011 JP 2011289136
(71) Applicant: Sony Corporation, Tokyo 108-0075 (JP)
(72) Inventor: GOMI, Keizo, Tokyo 108-0075 (JP); OTANI, Takahide, Tokyo 108-0075 (JP); GOTOH, Kenji, Tokyo 108-0075 (JP)
(74) Representative: Witte, Weller & Partner Patentanwälte mbB
(86) International application number: PCT/JP2012/081911
(87) International publication number: WO 2013/099571

(57) **Abstract**

There is provided a parallax adjustment device including a parallax adjustment unit configured to perform parallax adjustment on a left-eye image and a right-eye image that are obtained by imaging, and a data processing unit configured to associate metadata regarding the parallax adjustment with image data including the left-eye image and the right-eye image.

## Description

### Technical Field

The present disclosure relates to a parallax adjustment device, an image processing device, and a frame format.

### Background Art

In recent years, 3D display devices capable of causing a user to perceive stereoscopic images by displaying left-eye images (L images) and right-eye images (R images) have been distributed. In the stereoscopic images displayed by such 3D display devices, for example, a difference in a base-line length or an angle of convergence between the time of display and the time of imaging and recording, or even when an angle of convergence is the same as that in the real world, a difference in a focal distance may be a cause of visual fatigue. In particular, when a variation in parallax is large, for example, when a part in an image excessively protrudes or an object needlessly protrudes during display of a moving image, a load on a user becomes heavy.

From this viewpoint, technologies for performing comfortable 3D display have been studied. For example, Patent Literature 1 discloses a parallax conversion device that performs parallax adjustment on an L image and an R image by shifting the L image and/or the R image in a horizontal direction. Specifically, when a position at which an object is perceived is in front of a screen, the perceived position of the object can be brought toward the screen by shifting the R image to the right and the L image to the left. That is, the sense of protrusion can be suppressed. Likewise, when a perceived position of an object is behind a screen, the perceived position of the object can be brought toward the screen by shifting the R image to the left and the L image to the right. That is, the sense of protrusion can be enhanced.

In the recording of 3D display, as described above, only an L image and an R image are usually recorded and dedicated 2D images for 2D display are scarcely recorded. For this reason, 2D display devices generally display an L image or an R image to perform 2D display from images recorded for 3D display.

### Citation List

### Patent Literature

Patent Literature 1: JP 2011-55022A

### Summary of Invention

### Technical Problem

However, the above-described parallax adjustment has several adverse effects. For example, a shift amount in the parallax adjustment is different in a time axis direction. Therefore, when only an L or R image is displayed by a 2D display device, a subject which should be stationary may seem to swing (move) from side to side, thereby resulting in a 2D image that is unpleasant for a user.

When an image after parallax adjustment is doubly subjected to parallax adjustment by a 3D display device having a parallax adjustment function, in particular when first and second parallax adjustment algorithms are different, there is a concern that a broken image such as an unexpected image or an unsuitable 3D image may be generated. Also, when a horizontal central position of an L image or an R image before the parallax adjustment or a positional relation between the L image and the R image before the parallax adjustment is not known, it is difficult to perform image processing appropriately in some cases.

Accordingly, the present disclosure suggests a novel and improved parallax adjustment device, a novel and improved image processing device, and a novel and improved frame format configured to resolve adverse effects by parallax adjustment of right-eye and left-eye images.

### Solution to Problem

According to the present disclosure, there is provided a parallax adjustment device including a parallax adjustment unit configured to perform parallax adjustment on a left-eye image and a right-eye image that are obtained by imaging, and a data processing unit configured to associate metadata regarding the parallax adjustment with image data including the left-eye image and the right-eye image.

According to the present disclosure, there is provided an image processing device including a data acquisition unit configured to acquire image data including a left-eye image and a right-eye image and metadata regarding parallax adjustment on the left-eye image and the right-eye image, which is associated with the image data, and an image extraction unit configured to extract one region of the left-eye image or the right-eye image based on the metadata.

According to the present disclosure, there is provided a data format including metadata regarding parallax adjustment on a left-eye image and a right-eye image obtained through imaging, and image data including the left-eye image and the right-eye image.

### Advantageous Effects of Invention

According to the present disclosure described above, it is possible to resolve adverse effects by parallax adjustment of right-eye and left-eye images.

### Brief Description of Drawings

[FIG. 1] FIG. 1 is an explanatory diagram illustrating the configuration of an image processing system according to an embodiment of the present disclosure.
[FIG. 2] FIG. 2 is an explanatory diagram illustrating a principle of 3D display.
[FIG. 3A] FIG. 3A is an explanatory diagram illustrating a comfortable area.
[FIG. 3B] FIG. 3B is an explanatory diagram illustrating the comfortable area.
[FIG. 4] FIG. 4 is an explanatory diagram illustrating an overview of equivalent shift of LR images.
[FIG. 5] FIG. 5 is an explanatory diagram illustrating a specific example of 2D display based on an L image or an R image subjected to parallax adjustment.
[FIG. 6] FIG. 6 is a functional block diagram illustrating the configuration of an imaging device according to the embodiment of the present disclosure.
[FIG. 7A] FIG. 7A is an explanatory diagram illustrating a structure example of parallax adjustment metadata.
[FIG. 7B] FIG. 7B is an explanatory diagram illustrating the example of the structure of parallax adjustment metadata.
[FIG. 7C] FIG. 7C is an explanatory diagram illustrating the example of the structure of parallax adjustment metadata.
[FIG. 8] FIG. 8 is an explanatory diagram illustrating a modification example of the parallax adjustment metadata.
[FIG. 9] FIG. 9 is a flowchart illustrating an operation of the imaging device according to the embodiment of the present disclosure.
[FIG. 10] FIG. 10 is a functional block diagram illustrating the configuration of a reproduction device according to the embodiment of the present disclosure.
[FIG. 11] FIG. 11 is a functional block diagram illustrating the configuration of a display device according to the embodiment of the present disclosure.
[FIG. 12] FIG. 12 is an explanatory diagram illustrating image processing for 2D display.
[FIG. 13] FIG. 13 is a flowchart illustrating an operation for 2D display by a parallax readjustment unit.
[FIG. 14] FIG. 14 is a flowchart illustrating an operation for 3D display by the parallax readjustment unit.
[FIG. 15] FIG. 15 is an explanatory diagram illustrating cutout of an image according to an application example.
[FIG. 16] FIG. 16 is an explanatory diagram illustrating a specific example of the cutout of the image according to the application example.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Also, in the present specification and the drawings, different letters are sometimes suffixed to the same reference signs to distinguish a plurality of constituent elements having substantially the same functional configuration from each other. However, when it is not necessary to distinguish the plurality of constituent elements having substantially the same functional configuration, only the same reference signs are given.

The present disclosure will be described in the following order of items.
1. Configuration of image processing system
2. Configuration and operation of imaging device
3. Configurations of reproduction device and display device
4. Image processing for 2D display
5. Image processing for 3D display
6. Application example
7. Conclusion

### <1. Configuration of image processing system>

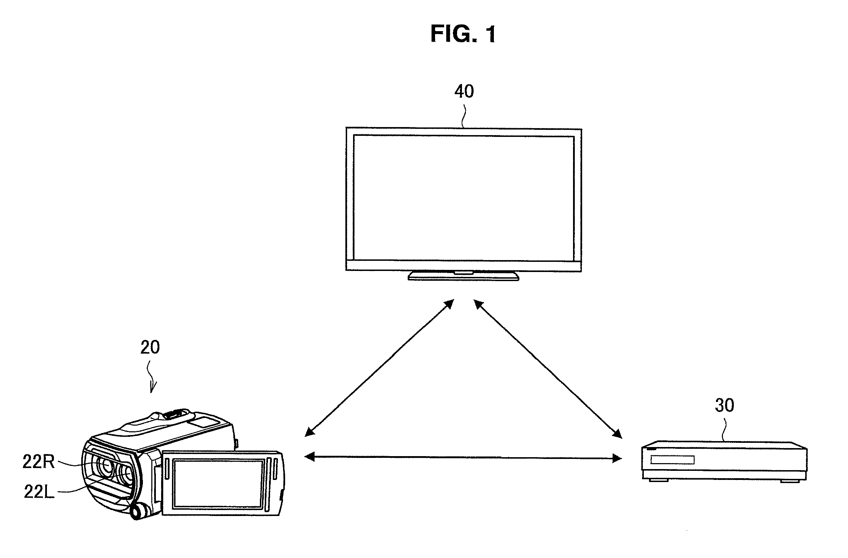

FIG. 1 is an explanatory diagram illustrating the configuration of an image processing system according to an embodiment of the present disclosure. As illustrated in FIG. 1, the image processing system according to the embodiment of the present disclosure includes an imaging device 20, a reproduction device 30, and a display device 40.

The imaging device 20 includes imaging units that convert light coming from a subject into an electric image signal. More specifically, the imaging device 20 according to the embodiment of the present disclosure includes imaging units 22L and 22R, as illustrated in FIG. 1. The imaging unit 22L acquires an L image for 3D display and the imaging unit 22R acquires an R image for the 3D display.

Here, the imaging device 20 according to the embodiment of the present disclosure adjusts parallax between the LR images and generates a data stream by encoding metadata regarding the parallax adjustment along with the LR images. Then, the imaging device 20 records the data stream including the metadata regarding the parallax adjustment and the LR images on a recording medium.

Also, in FIG. 1, the imaging device 20 is illustrated as an example of a parallax adjustment device that adjusts parallax between the LR images, but the parallax adjustment device is not limited to the imaging device 20. For example, the parallax adjustment device may be an information processing device such as a personal computer (PC), a household video processing device (a DVD recorder, a video cartridge recorder, or the like), a personal digital assistant (PDA), a household game device, or a household appliance. Also, the parallax adjustment device may be an information processing device such as a smartphone, a portable telephone, a personal handyphone system (PHS), a portable music reproduction device, a portable video processing device, or a portable game device.

The reproduction device 30 reads a data stream from a recording medium on which metadata regarding parallax adjustment and a data stream including LR images are recorded, and performs a reproduction process for 3D display or 2D display based on the read data stream. Then, reproduction data obtained by the reproduction device 30 is transmitted to the display device 40 or a recording device.

Also, the recording medium from which the data stream is read by the reproduction device 30 may be a recording medium included in the reproduction device 30, may be a recording medium installed in the imaging device 20, or may be a removable recording medium.

The display device 40 has a 3D display function and a 2D display function. For example, the display device 40 can perform 3D display or 2D display based on the reproduction data transmitted from the reproduction device 30. The display device 40 can also perform the 3D display or the 2D display based on the data stream recorded on a recording medium.

The reproduction device 30 and the display device 40 are examples of image processing devices. In Fig. 1, a household video processing device is illustrated as the reproduction device 30 and a TV display device is illustrated as the display device 40, but the image processing devices such as the reproduction device 30 and the display device 40 are not limited to these examples. For example, the image processing devices may be information processing devices enumerated as examples of imaging devices.

### (Brief overview of 3D display)

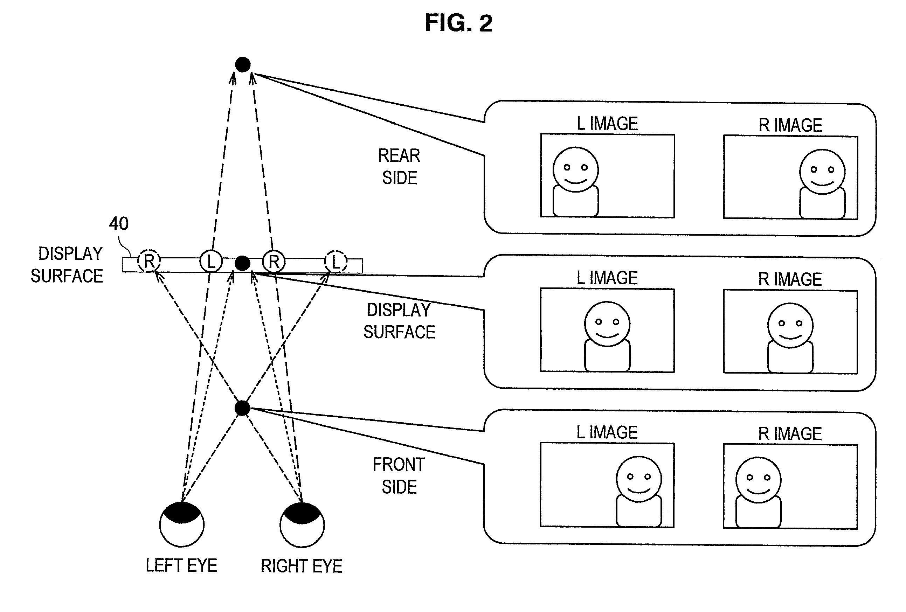

Here, a brief overview of 3D display will be described. When an L image and an R image are displayed on the display device 40, the L image is viewed by the left eye of a user, and the R image is viewed by the right eye of the user, the user can stereoscopically perceive an image based on parallax between the L image and the R image. This point will be described more specifically with reference to FIG. 2.

FIG. 2 is an explanatory diagram illustrating a principle of 3D display. The user perceives that an object exists at a position at which a straight line connecting the right eye of the user and the object of the R image and a straight line connecting the left eye of the user and the object of the L image intersect. Therefore, as illustrated in FIG. 2, when the position of intersection is in front of a display surface of the display device 40, a sense of protrusion can be obtained. When the position of intersection is behind the display surface of the display device 40, a sense of depth can be obtained.

In such 3D display, for example, a difference in a base-line length or an angle of convergence between the time of display and the time of imaging and recording, or even when the angle of convergence is the same as that in the real world, a difference in a focal distance may be a cause of visual fatigue. In particular, when a variation in parallax is large, for example, when a part in an image excessively protrudes or an object needlessly protrudes during display of a moving image, a load on the user becomes heavy.

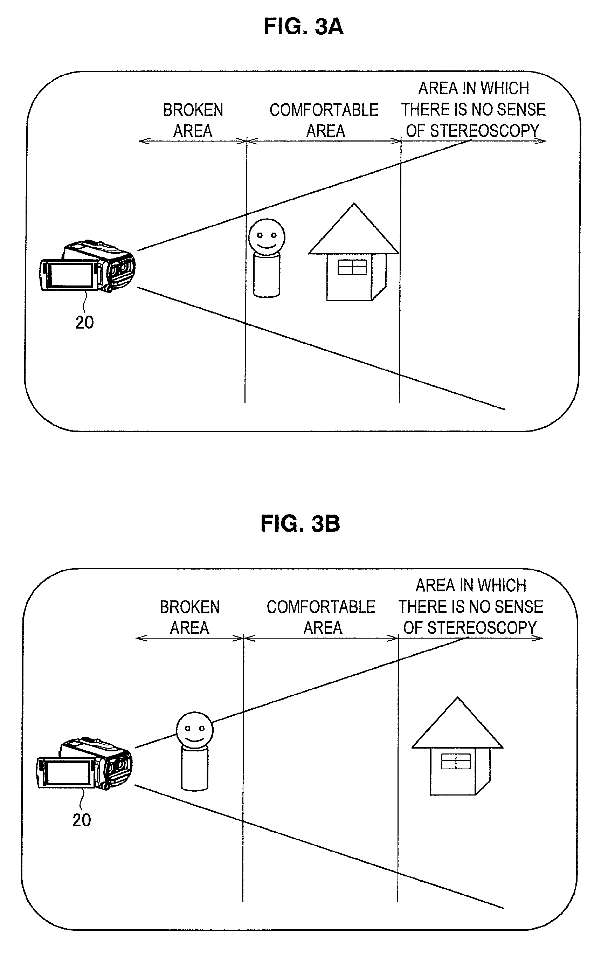

Therefore, as illustrated in FIG. 3A, a position at which the object is perceived by the user is preferably within a comfortable area in which the user can fuse the LR images effortlessly. On the other hand, as illustrated in FIG. 3B, when the position at which the user perceives the object is within a broken area in front of the comfortable area, a load on the user becomes heavy. When the position at which the user perceives the object is behind the comfortable area, it is difficult to obtain the sense of stereoscopy.

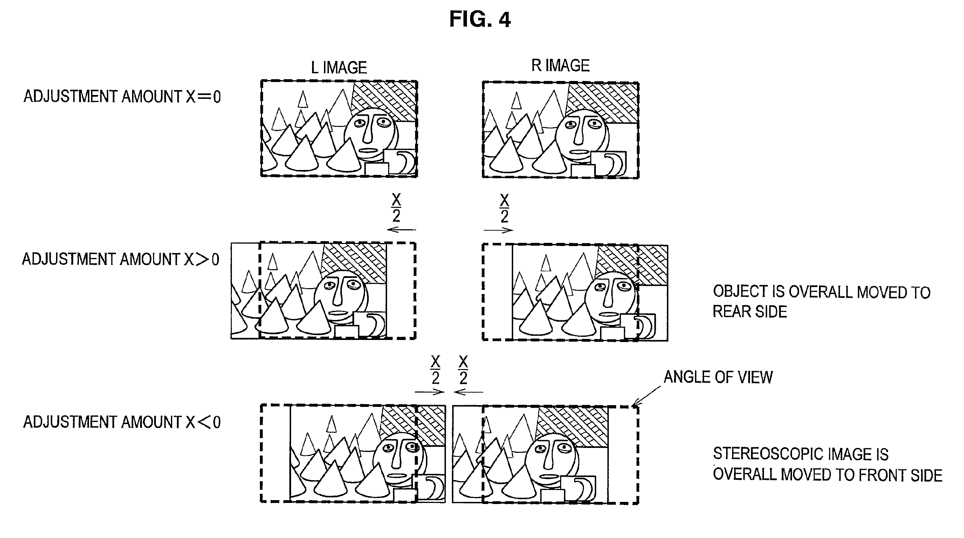

From this viewpoint, technologies for performing comfortable 3D display have been studied. For example, JP 2011-55022A discloses a parallax conversion device that performs parallax adjustment on an L image and an R image by shifting the L image and/or the R image in horizontal direction. The parallax adjustment is realized by shift of only the L image, shift of only the R image, or equivalent shift of the L image and the R image. The equivalent shift of the LR images is most generally used to avoid moving a central axis of the LR images. Hereinafter, the equivalent shift of the LR images will be described in brief with reference to FIG. 4.

FIG. 4 is an explanatory diagram illustrating an overview of the equivalent shift of LR images. As illustrated in FIG. 4, when an adjustment amount > X, the L image and the R image are each shifted by X/2 in a direction in which an object is overall moved to the rear side. On the other hand, when the adjustment amount < X, the L image and the R image are each shifted by X/2 in a direction in which an object is overall moved to the front side.

Also, a method of calculating an appropriate adjustment amount of each of the LR images is not particularly limited. However, an appropriate adjustment amount can be calculated by a known method such as a method disclosed in, for example, JP 2011-55022A. Thus, the detailed description will be omitted here.

### (Background)

In the above-described recording for the 3D display, only an L image and an R image are usually recorded, and thus dedicated 2D images for 2D display are scarcely recorded. For this reason, a 2D display device generally displays an L image or an R image to perform 2D display from images recorded for 3D display.

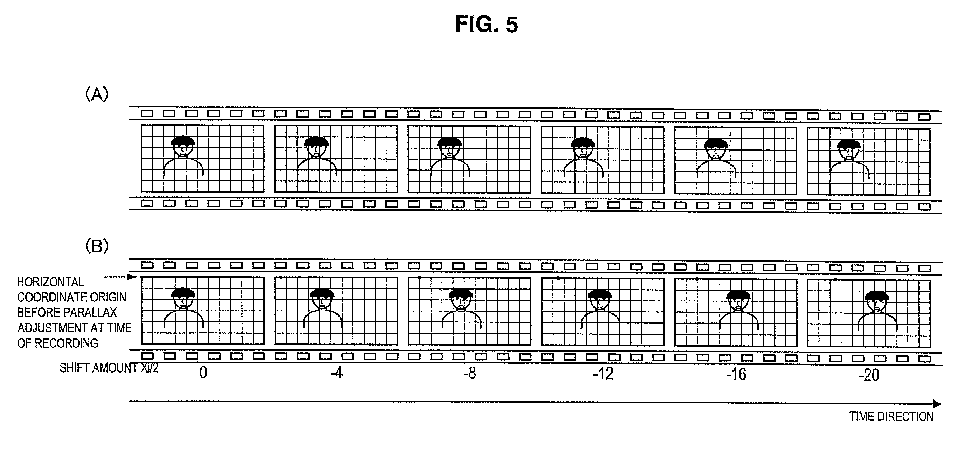

However, the above-described parallax adjustment has several adverse effects. For example, an adjustment amount in the parallax adjustment is different in a time axis direction. Therefore, when only an L or R image is displayed, a subject which should be stationary may seem to swing (move) from side to side, thereby resulting in a 2D image that is unpleasant for a user. Hereinafter, this point will be described specifically with reference to FIG. 5.

FIG. 5 is an explanatory diagram illustrating a specific example of 2D display based on an L image or an R image subjected to parallax adjustment. In more detail, FIG. 5A illustrates a specific example of display by original 2D recording and FIG. 5B illustrates a specific example of an L image subjected to parallax adjustment.

As illustrated in FIG. 5A, in the display by the original 2D recording, the position of a subject within an angle of view is fixed when the subject is stationary. On the other hand, in the L image subjected to the parallax adjustment, as illustrated in FIG. 5B, the position of the subject within the angle of view is moved along the time axis by the parallax adjustment even when the subject is stationary. Specifically, an adjustment amount X₁/2 of the first L image is 0, but adjustment amounts X₂/2 to X₆/2 of the L images after the second image are varied to -4, -8, -12, -16, and -20. Therefore, the 2D image may cause the user discomfort.

When an image after parallax adjustment is doubly subjected to parallax adjustment by a display device having a parallax adjustment function, in particular when first and second parallax adjustment algorithms are different, there is a concern that a broken image such as an unexpected image or an unsuitable 3D image may be generated. Also, when a horizontal central position of an L image or an R image before the parallax adjustment or a positional relation between the L image and the R image before the parallax adjustment is not known, it is difficult to perform image processing appropriately in some cases.

Accordingly, an embodiment of the present disclosure has been created from the viewpoint of the above-mentioned circumstances. According to the embodiment of the present disclosure, it is possible to resolve adverse effects from the parallax adjustment of the L image and the R image described above. Hereinafter, the imaging device 20, the reproduction device 30, and the display device 40 according to the embodiment of the present disclosure will be described sequentially in detail. Also, the description will be made assuming that a target is a moving image, but the embodiment of the present disclosure is also applicable to a still image.

### <2. Configuration and operation of imaging device>

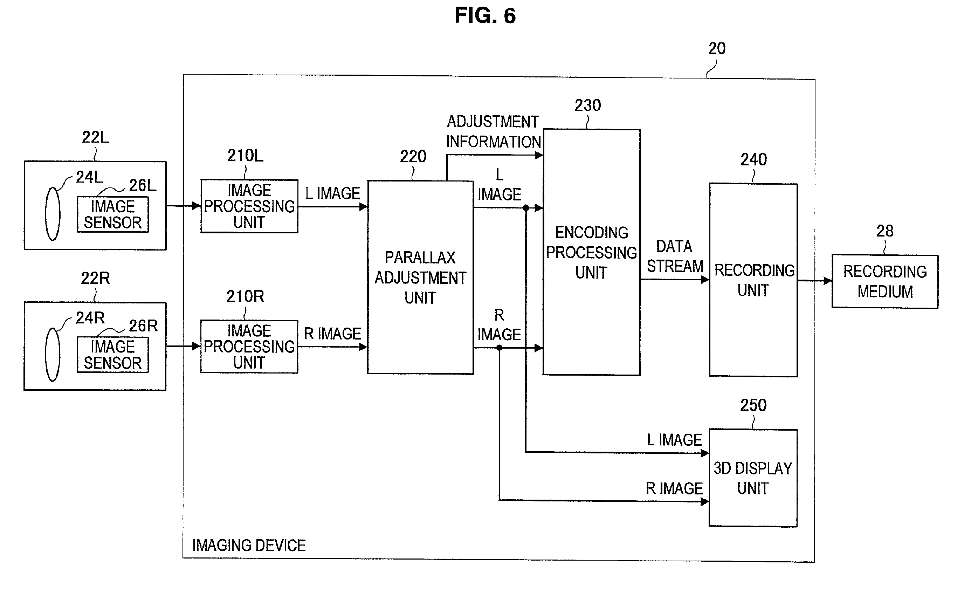

FIG. 6 is a functional block diagram illustrating the configuration of the imaging device 20 according to the embodiment of the present disclosure. As illustrated in FIG. 6, the imaging device 20 includes an imaging unit 22L, an imaging unit 22R, a recording medium 28, an image processing unit 210L, an image processing unit 210R, a parallax adjustment unit 220, an encoding processing unit 230, a recording unit 240, and a 3D display unit 250.

Each imaging unit 22 includes an imaging optical system 24 such as a photography lens and a zoom lens condensing light and an image sensor 26 such as a charge coupled device (CCD) or a complementary metal oxide semiconductor (CMOS). The imaging optical system 24 forms a subject image in the image sensor 26 by condensing light from a subject and the image sensor 26 converts the formed subject image into an electric image signal. An image signal of the L image obtained by the left-eye imaging unit 22L is output to the image processing unit 210L and an image signal of the R image obtained by the right-eye imaging unit 22R is output to the image processing unit 210R.

Each image processing unit 210 performs a development process, a correction process, a resolution conversion (scaling) process, a noise reduction process, and the like on an image input from the imaging unit 22. An LR image pair processed by the image processing units 210L and 210R is output to the parallax adjustment unit 220. Also, the LR image pair is a pair of the L image and the R image strung together and may be sent in a time-division manner.

The parallax adjustment unit 220 calculates a shift amount of the input LR image pair, i.e., a parallax adjustment amount, by an algorithm described in JP 2011-55022A. Thereafter, the parallax adjustment unit 220 shifts and cuts out both of the LR images or one of the LR images in the horizontal direction according to the calculated adjustment amount. Also, when there is a region that is not present in an image before the cutout, the parallax adjustment unit 220 may embed and replace the region with black or may copy an image end portion.

The parallax adjustment unit 220 outputs the LR image pair after the parallax adjustment and information regarding the parallax adjustment to the encoding processing unit 230. Also, the parallax adjustment unit 220 may shift an image set in advance. The method of shifting and cutting out an image has been described above as the parallax adjustment method, but the parallax adjustment method is not limited to this example.

The encoding processing unit 230 is a data processing unit that performs encoding in a predetermined compression format so that the LR image pairs accumulated in the time direction and parallax adjustment metadata to be described below are associated and generates a data stream including the LR image pairs and the parallax adjustment metadata. Also, an example of a moving image compression format includes "AVCHD 3D" generated by AVCHD ver 2.0 and an example of a still image compression format includes a multi-picture (MPO) format.

The recording unit 240 records the data stream obtained by the encoding processing unit 230 on the recording medium 28. Also, the recording medium 28 may be a storage medium such as a non-volatile memory, a magnetic disk, an optical disc, or a magneto-optical (MO) disc. Examples of the non-volatile memory include a flash memory, an SD card, a micro SD card, a USB memory, an electrically erasable programmable read-only memory (EEPROM), and an erasable programmable ROM (EPROM). Also, examples of the magnetic disk include a hard disk and a disk-type magnetic disk. Also, examples of the optical disc include a compact disc (CD), a digital versatile disc (DVD), and a Blu-ray (BD) disc (registered trademark).

The 3D display unit 250 directly displays the LR image pair output from the parallax adjustment unit 220, or temporarily retains the LR image pair in a system general-purpose memory (not illustrated) such as an SRAM or a DRAM and then displays the LR image pair.

### (Parallax adjustment metadata)

Here, the parallax adjustment metadata obtained during the encoding by the encoding processing unit 230 will be described in detail. The parallax adjustment metadata is data indicating content of the parallax adjustment performed by the parallax adjustment unit 220 and can be realized in diverse forms, as will be described below.

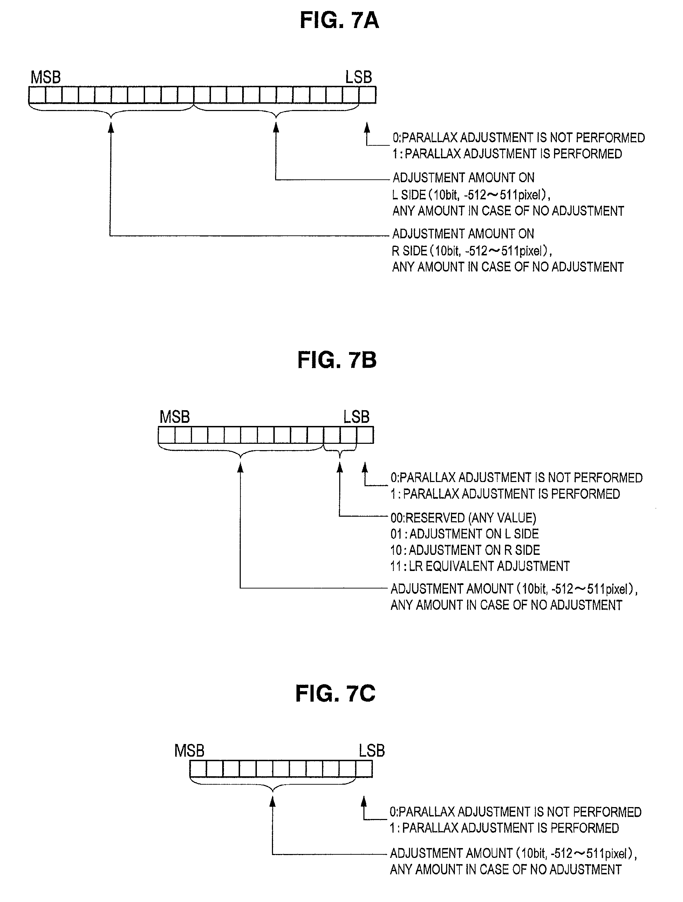

FIG. 7A is an explanatory diagram illustrating a first structure example of the parallax adjustment metadata. As illustrated in FIG. 7A, the parallax adjustment metadata in the first structure example is formed by a total of 21 bits including 1 flag bit indicating whether the parallax adjustment is performed, 10 bits indicating an adjustment amount on the side of the L image, and 10 bits indicating an adjustment amount on the side of the R image.

Since whether the parallax adjustment is performed can be expressed by 2 types of states, a flag indicating whether the parallax adjustment is performed has 1 bit. Also, as illustrated in FIG. 7A, -512 to 511 can be expressed by disposing 10 bits of data to indicate an adjustment amount of each image. Also, the adjustment amount is generally expressed by 2's complement, but an expression method is not particularly limited. Any expression such as a straight binary or 1's complement can also be used.

FIG. 7B is an explanatory diagram illustrating a second structure example of the parallax adjustment metadata. As illustrated in FIG. 7B, the parallax adjustment metadata in the second structure example is formed by a total of 13 bits including 1 flag bit indicating whether the parallax adjustment is performed, 2 bits indicating an image subjected to the parallax adjustment, and 10 bits indicating an adjustment amount. For example, the 2 bits indicating an image subjected to the parallax adjustment may indicate the following content when X is the adjustment amount.

00: Reserved (any value can be set)
01: The L image is moved by X pixels. The R image is original.
10: The R image is moved by X pixels. The L image is original.
11: The L image is moved by X/2 pixels and the R image is moved by X/2 pixels.

By expressing the image subjected to the parallax adjustment with 2 bits in this way, a data amount of the parallax adjustment metadata can be suppressed.

FIG. 7C is an explanatory diagram illustrating a third structure example of the parallax adjustment metadata. As illustrated in FIG. 7C, the parallax adjustment metadata in the third structure example is formed by a total of 11 bits including 1 flag bit indicating whether the parallax adjustment is performed and 10 bits indicating an adjustment amount. The third structure example can be used when use of the most general LR equivalent shift is implicitly defined. For example, this example is effective when the number of parallax adjustment methods of makers or the like is singular and it is not necessary to distinguish parallax adjustment methods from each other.

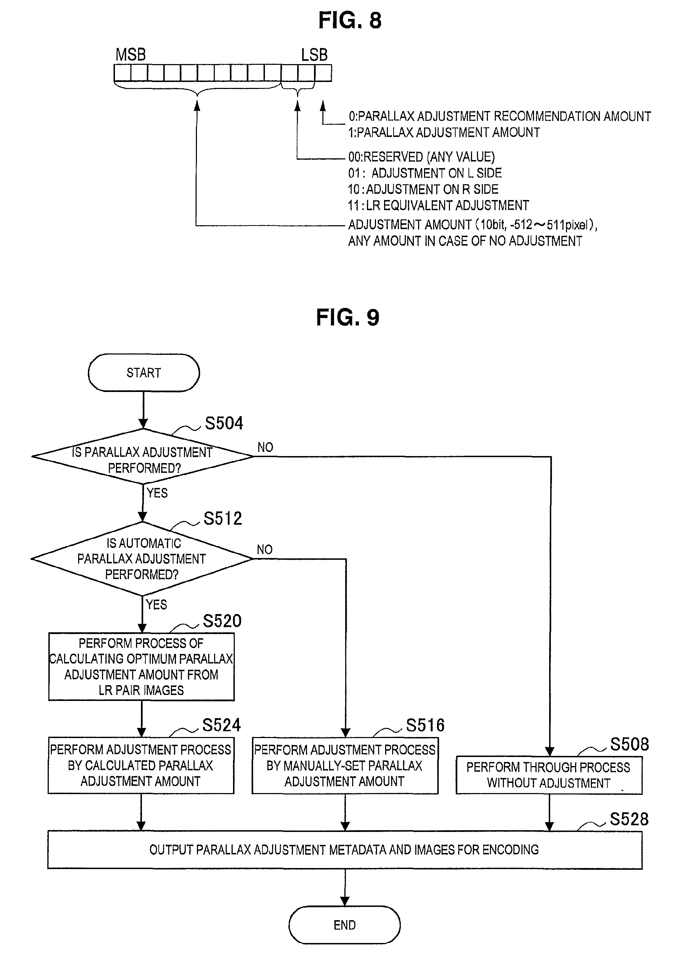

The numbers of bits for the purposes illustrated in FIGS. 7A to 7C are merely examples and can be appropriately modified. Also, the bits indicating the image subjected to the parallax adjustment or the bits indicating the adjustment amount may not be joined, but may be distributed and disposed in the metadata. Also, when the parallax adjustment is not performed, data indicating other information may be disposed in a data portion indicating the adjustment amount in the parallax metadata. This point will be described below with reference to FIG. 8.

FIG. 8 is an explanatory diagram illustrating a modification example of the parallax adjustment metadata. As illustrated in FIG. 8, the parallax adjustment metadata in the modification example is formed by a total of 13 bits including 10 bits indicating the adjustment amount, 2 bits indicating a parallax adjustment target image, and a 1 flag bit indicating a property of the adjustment amount indicated by the data portion of 10 bits.

Specifically, when the 1 flag bit is "1," the 1 flag bit indicates that the parallax adjustment is actually performed and that the adjustment amount indicated by the data portion of 10 bit is an adjustment amount in the actually performed parallax adjustment. On the other hand, when the 1 flag bit is "0," the 1 flag bit indicates that the parallax adjustment is not performed and the adjustment amount indicated by the data portion of 10 bits is a recommended parallax adjustment amount.

By disposing data indicating other information in the parallax adjustment metadata in this way when the parallax adjustment is not performed, the data region of the parallax adjustment metadata can be effectively utilized.

The first to third structure examples and the modification example of the parallax adjustment metadata have been described above. The above-described parallax adjustment, metadata is ideally associated with the LR image pair (for each field or frame) in a one-to-one manner, but may be associated with the LR image pair in any time unit. For example, in the MPEG format, the parallax adjustment metadata may be associated in a GOP unit. That is, the data stream generated by the encoding processing unit 230 may be suitable for any image format and parallax adjustment metadata indicating content of the parallax adjustment may be included. The compression format is not particularly limited.

The example in which the parallax adjustment metadata includes the 1 flag bit indicating whether the parallax adjustment is performed has been described above. However, the parallax adjustment metadata may not include the 1 flag bit indicating whether the parallax adjustment is performed. In this case, when the adjustment amount indicated by the data portion of 10 bits is 0, the parallax adjustment is not performed. When the adjustment amount is not 0, the parallax adjustment can be determined to be performed.

### (Operation of imaging device)

Next, an operation of the imaging device 20 according to the embodiment of the present disclosure will be outlined with reference to FIG. 9.

FIG. 9 is a flowchart illustrating an operation of the imaging device 20 according to the embodiment of the present disclosure. Also, in FIG. 9, the example of the operation on one LR image pair has been described. However, when a moving image is a target, the imaging device 20 may repeat the process illustrated in FIG. 9 or may accumulate a given number of LR pair images and may then perform an encoding process.

First, the parallax adjustment unit 220 determines whether to perform the parallax adjustment according to content set in advance, as illustrated in FIG. 9 (S504). Then, when the parallax adjustment unit 220 determines not to perform the parallax adjustment, the parallax adjustment unit 220 outputs parallax of the LR image pair without adjusting the parallax (S508: a through process).

Conversely, when the parallax adjustment unit 220 determines to perform the parallax adjustment, the parallax adjustment unit 220 determines whether to perform the automatic parallax adjustment or perform manual parallax adjustment (S512). Then, when the parallax adjustment unit 220 determines to perform the manual parallax adjustment, the parallax adjustment unit 220 performs the parallax adjustment on the LR images by a separately set adjustment amount (S516).

Also, when the parallax adjustment unit 220 performs automatic parallax adjustment, the parallax adjustment unit 220 calculates an optimum parallax adjustment amount from the input LR image pair (S520) and adjusts the parallax of the LR image pair by the calculated adjustment amount (S524).

After the process of S508, S516, or S524, the parallax adjustment unit 220 outputs the LR image pair and parallax adjustment metadata indicating content of the parallax adjustment for the encoding processing unit 230 on the rear stage (S528).

### <3. Configurations of reproduction device and display device>

The configuration and the operation of the imaging device 20 according to the embodiment of the present disclosure have been described above. Next, the configurations of the reproduction device 30 and the display device 40 according to the embodiment of the present disclosure will be described.

### (Configuration of reproduction device)

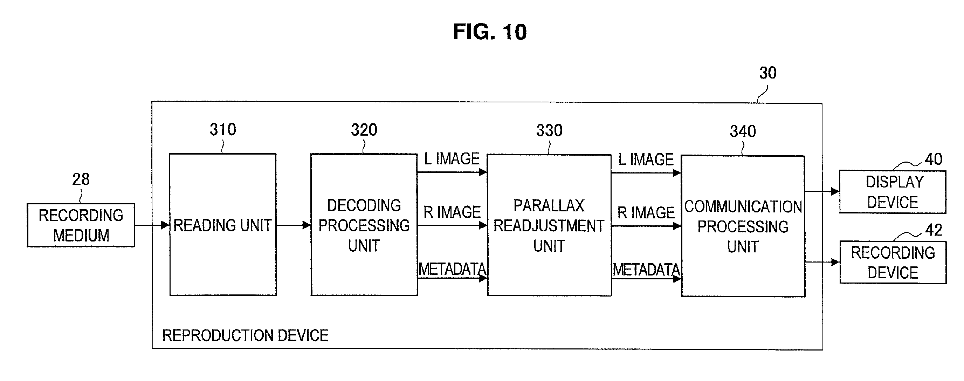

FIG. 10 is a functional block diagram illustrating the configuration of the reproduction device 30 according to the embodiment of the present disclosure. As illustrated in FIG. 10, the reproduction device 30 includes a reading unit 310, a decoding processing unit 320, a parallax readjustment unit 330, and a communication processing unit 340.

The reading unit 310 reads a data stream recorded in a format including the parallax adjustment metadata from the recording medium 28 and outputs the data stream to the decoding processing unit 320.

The decoding processing unit 320 converts the data stream into an L image, an R image, and parallax adjustment metadata and outputs the L image, the R image, and the parallax adjustment metadata to the parallax readjustment unit 330. Also, the decoding processing unit 320 may output one of the L image and the R image and the parallax adjustment metadata to the parallax readjustment unit 330 to perform 2D display.

The parallax readjustment unit 330 readjusts the parallax of the LR image pair according to an operation setting set separately, as necessary, and outputs the LR image pair after the parallax adjustment to the communication processing unit 340. The process performed by the parallax readjustment unit 330 is different depending on whether an output image is a 2D image, a 3D image, or the like. The process in the case in which the 2D image is output will be described in detail in "4. Image processing for 2D display" and the process in the case in which the 3D image is output will be described in detail in "5. Image processing for 3D display." Also, the parallax readjustment unit 330 may also output the parallax adjustment metadata after parallax readjustment to the communication processing unit 340.

The communication processing unit 340 converts the images or the like input from the parallax readjustment unit 330 in any wireless or wired transmission format and transmits the converted images or the like to the display device 40 or the recording device 42 via a transmission medium such as radio waves or a wired cable. Also, as the existing transmission formats, there are HDMI, SATA, IEEE 1394A/B, USB, and the like which are wired standards and there are wireless LAN (IEEE 802.11), WiMax, and various standards used for portable telephones which are wireless standards. However, the transmission format used in the present embodiment is not particularly limited.

Also, the reproduction device 30 may have a configuration to further perform image processing and editing on the LR image pair processed by the parallax readjustment unit 330 or may have a configuration to record the LR image pair.

### (Configuration of display device)

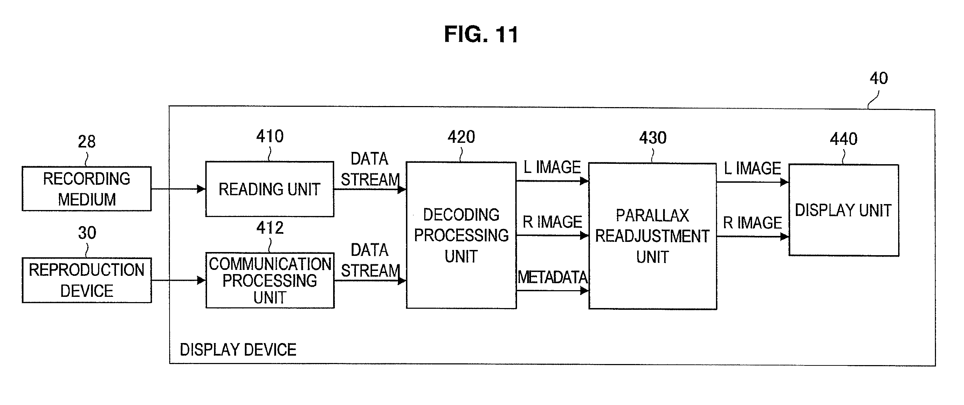

FIG. 11 is a functional block diagram illustrating the configuration of the display device 40 according to the embodiment of the present disclosure. As illustrated in FIG. 11, the display device 40 according to the embodiment of the present disclosure includes a reading unit 410, a communication processing unit 412, a decoding processing unit 420, a parallax readjustment unit 430, and a display unit 440.

The reading unit 410 reads a data stream recorded in a format including the parallax adjustment metadata from the recording medium 28 and outputs the data stream to the decoding processing unit 320. The communication processing unit 412 receives the data stream transmitted in a wireless or wired manner from the reproduction device 30 or the like and outputs the data stream to the decoding processing unit 320. The reading unit 410 and the communication processing unit 412 are examples of a data acquisition unit that acquires the parallax adjustment metadata.

The decoding processing unit 420 converts the data stream into an L image, an R image, and parallax adjustment metadata and outputs the L image, the R image, and the parallax adjustment metadata to the parallax readjustment unit 430. Also, the decoding processing unit 420 may output one of the L image and the R image and the parallax adjustment metadata to the parallax readjustment unit 430 when the display unit 440 performs 2D display.

The parallax readjustment unit 430 readjusts the parallax of the LR image pair according to an operation setting set separately, as necessary, and causes the display unit 440 to display the LR image pair after the parallax adjustment. The process performed by the parallax readjustment unit 430 is different depending on whether an output image is a 2D image or a 3D image. The process in the case in which the 2D image is output will be described in detail in "4. Image processing for 2D display" and the process in the case in which the 3D image is output will be described in detail in "5. Image processing for 3D display." Also, when the display device 40 does not include the parallax readjustment unit 430, the display device 40 directly outputs the L image and the R image obtained by the decoding processing unit 420 to the display unit 440. Also, the parallax readjustment unit 430 according to the present embodiment also operates as an image extraction unit or a parallax adjustment cancellation unit extracting the L image or the R image so that the previously performed parallax adjustment is cancelled.

The display unit 440 displays the images input from the parallax readjustment unit 430. For example, when the L image and the R image are input from the parallax readjustment unit 430, the display unit 440 performs the 3D display using the L image and the R image. Also, when the L image or the R image is input from the parallax readjustment unit 430, the display unit 440 performs the 2D display using the L image or the R image.

### <4. Image processing for 2D display>

The configurations of the reproduction device 30 and the display device 40 according to the embodiment of the present disclosure have been described. Next, image processing performed for the 2D display by the parallax readjustment unit 430 of the display device 40 will be described in detail. Also, a process performed for the 2D display based on the LR image pair subjected to the parallax adjustment through the LR equivalent shift will be described below. The image processing performed by the parallax readjustment unit 430 of the display device 40 can also be employed in image processing by the parallax readjustment unit 330 of the reproduction device 30.

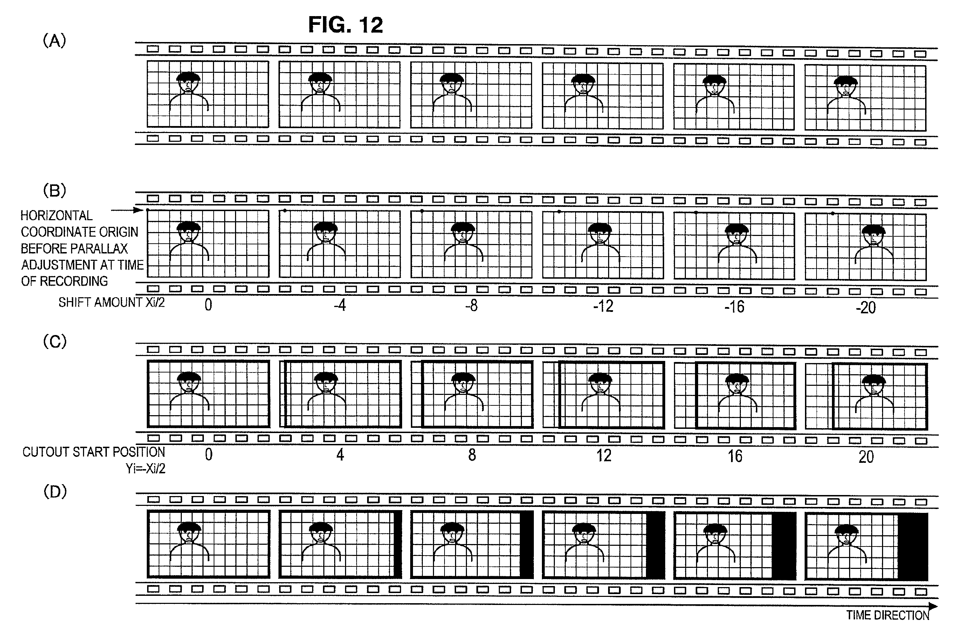

FIG. 12 is an explanatory diagram illustrating image processing for 2D display. When a stationary subject is photographed with a monocular 2D camera at a fixed angle of view, as illustrated in FIG. 12A, the position of the subject within the angle of view is fixed irrespective of a time axis. Therefore, when the image is displayed by the display device 40 or the like, the subject is stationary in the image.

However, when the L image (or the R image may also be used) of the LR image pair recorded through the parallax adjustment by a two-lens 3D camera as in the imaging device 20 is substituted as a 2D image, the L image is shifted by Xi/2 (where i is an image number corresponding to a frame or a field) according to a parallax adjustment amount Xi in spite of the fact that the subject is stationary. Therefore, when the L image is simply substituted as the 2D image, as illustrated in FIG. 12B, the position of the subject within the angle of view which should be stationary may move along the time axis.

The parallax readjustment unit 430 according to the embodiment of the present disclosure can resolve the adverse effect caused due such parallax adjustment through a process to be described below.

The parallax adjustment amount recorded in the parallax adjustment metadata is the same as a horizontal movement amount or a shift amount of a cutout position at the time of the recording. For example, since the adjustment amount X₂/2 = -4 pixels, the second image in FIG. 12B is cut out from the outside by 4 pixels from the horizontal coordinate origin at the time of the recording.

Accordingly, in the case of the 2D display, when a process is performed so that the horizontal coordinate origin before the parallax adjustment at the time of the recording is located at the upper left corner of a display area, that is, when the shift by the parallax adjustment is cancelled, the position of the subject within the angle of view is fixed, and thus preferred 2D display can be realized. Also, when the horizontal coordinate origin before the parallax adjustment is located at the upper left corner of the display area, the horizontal coordinate center before the parallax adjustment is also fixed to the center of the display area.

To perform the foregoing process, the parallax readjustment unit 430 cuts out the L image subjected to the parallax adjustment from a cutout start position Yi expressed by "-Xi/2," as illustrated in FIG. 12C. However, the number of horizontal pixels of the recorded image is fixed to, for example, 1920 pixels. Therefore, when the cutout start position Yi is 4 pixels, only 1916 pixels are present in the horizontal direction of the image after the cutout. For this reason, the parallax readjustment unit 430 embeds the missing region (the right side in the drawing) with black in the number of 1920 horizontal pixels as in the image after the cutout illustrated in FIG. 12D so that the number of horizontal pixels of the image becomes 1920. Also, the parallax readjustment unit 430 may not perform the black embedding, but may copy the image of the end portion so that the number of horizontal pixels of the image becomes 1920.

As understood from the comparison between FIGS. 12B and 12D, the position of the stationary subject within the angle of view can be fixed according to the embodiment of the present disclosure. Also, for convenience of the description, the black band is emphasized in FIG. 12D. However, since the actual maximum parallax adjustment amount Xi is about ±100 pixels and Xi/2 is about 50 pixels with respect to the number of horizontal pixels of 1920, the black band of about 2% with respect to 1920 pixels scarcely affects the 2D display.

Also, the example in which the parallax adjustment amount is negative has been described above. However, the same can also apply even when the parallax adjustment amount is positive. When the parallax adjustment amount is positive, the image is cut out from the horizontal coordinate origin at the time of the recording to the right side (the inside of the image). Therefore, the region embedded with black on the left side is consequently obtained.

### (Operation of parallax readjustment unit)

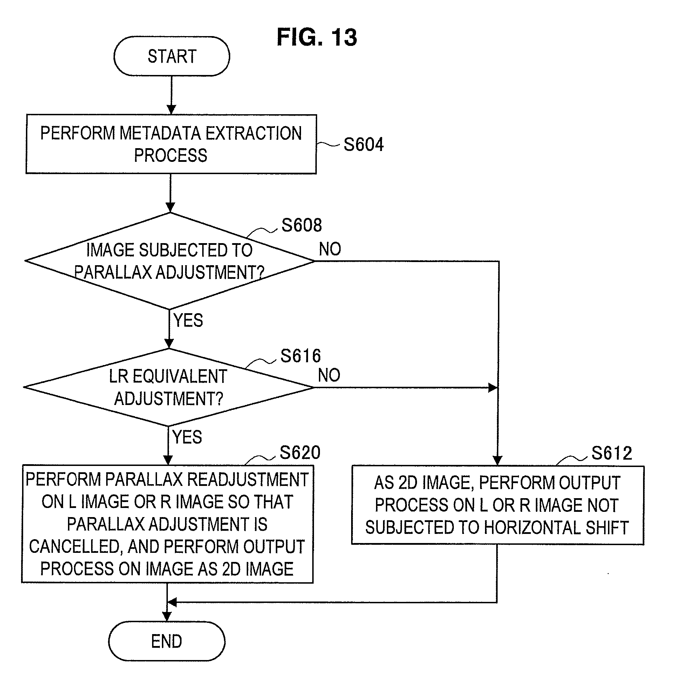

The image processing performed for the 2D display by the parallax readjustment unit 430 has been described above. Next, an operation performed for the 2D display by the parallax readjustment unit 430 will be outlined with reference to FIG. 13.

FIG. 13 is a flowchart illustrating an operation for 2D display by the parallax readjustment unit 430. Also, an example of the operation on one LR image pair will be described in FIG. 13. However, when a moving image is a target, the imaging device 20 may repeat the process illustrated in FIG. 13.

As illustrated in FIG. 13, the parallax readjustment unit 430 first extracts the parallax adjustment metadata from the decoded metadata (S604). Subsequently, based on the parallax adjustment metadata, the parallax readjustment unit 430 determines whether the input L image or R image is the image subjected to the parallax adjustment (S608). Then, when the parallax readjustment unit 430 determines that the input image is not subjected to the parallax adjustment, the parallax readjustment unit 430 causes the display unit 440 to display the input image without processing the input image (S612). Also, when the LR image pair is input to the parallax readjustment unit 430, the parallax readjustment unit 430 may select the L image or the R image and cause the display unit 440 to display the selected image.

Conversely, when the input image is subjected to the parallax adjustment and is also subjected to the parallax adjustment through the LR equivalent shift (S616), the parallax readjustment unit 430 readjusts the parallax by the above-described method of cancelling the parallax adjustment based on the adjustment amount indicated by the parallax adjustment metadata (S620). Also, when the LR image pair is subjected to the parallax adjustment by a method other than the LR equivalent shift, the parallax readjustment unit 430 selects the image not subjected to horizontal shift between the L image and the R image and causes the display unit 440 to display the selected image (S612).

### <5. Image processing for 3D display>

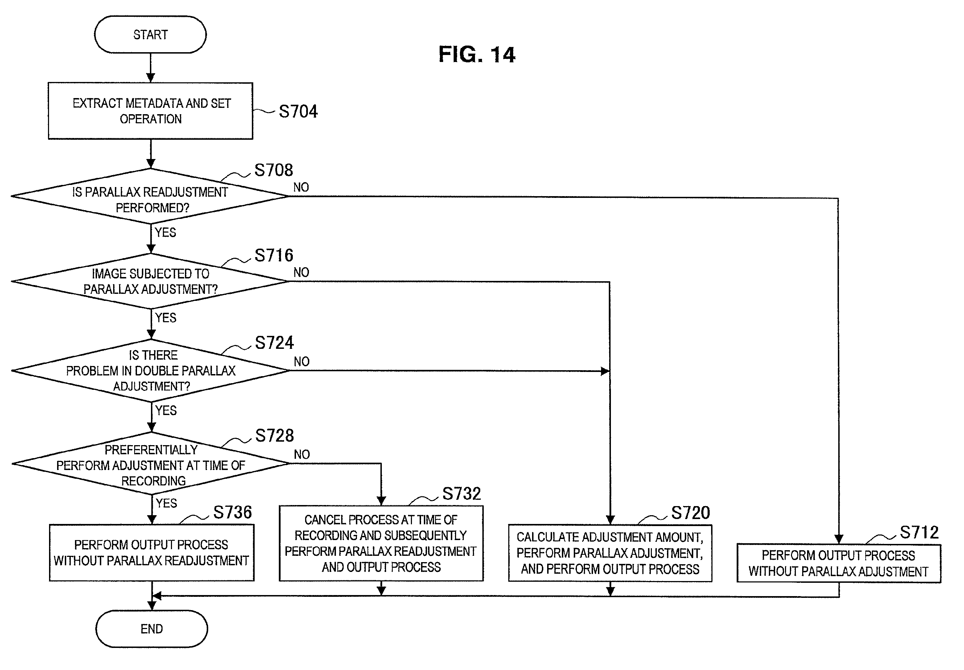

The image processing performed for the 2D display has been described above. Next, image processing performed for 3D display by the parallax readjustment unit 430 of the display device 40 will be described in detail with reference to FIG. 14. The image processing performed by the parallax readjustment unit 430 of the display device 40 can also be employed in image processing by the parallax readjustment unit 330 of the reproduction device 30.

FIG. 14 is a flowchart illustrating an operation for 3D display by the parallax readjustment unit 430. Also, in FIG. 14, the example of the operation on one LR image pair has been described. However, when a moving image is a target, the imaging device 20 may repeat the process illustrated in FIG. 14

As illustrated in FIG. 14, the parallax readjustment unit 430 first extracts the parallax adjustment metadata from the decoded metadata (S704). Subsequently, the parallax readjustment unit 430 determines whether to perform the parallax readjustment based on the operation setting set separately (S708). Then, when the parallax readjustment unit 430 does not perform the parallax readjustment, the parallax readjustment unit 430 outputs the decoded LR image pair to the display unit 440 without conversion (S712).

Conversely, when the parallax readjustment unit 430 determines to perform the parallax adjustment and the decoded LR image pair is not subjected to the parallax adjustment (S716), the parallax readjustment unit 430 calculates a parallax adjustment amount of the LR image pair and performs the parallax adjustment on the LR image pair by the algorithm disclosed in JP 2011-55022A (S720).

Also, when the parallax readjustment unit 430 determines to perform the parallax adjustment and the decoded LR image pair is subjected to the parallax adjustment (S716), the parallax readjustment unit 430 determines whether there is a problem after performing the parallax adjustment twice (S724). Then, when the parallax readjustment unit 430 determines that there is no problem after performing the parallax adjustment twice based on, for example, separated recorded metadata such as Makernote, the parallax readjustment unit 430 performs the parallax readjustment by the algorithm disclosed in JP 2011-55022A (S720).

Conversely, when the parallax readjustment unit 430 determines that there is a problem after performing the parallax adjustment twice, the parallax readjustment unit 430 performs one of the following processes according to the operation set separately (S728):
a) the process of cancelling the parallax adjustment on the LR image pair by the method described in "4. Image processing for 2D display" is performed and the parallax readjustment is then performed (S732); and
b) the decoded LR image pair is output to the display unit 440 without performing the parallax readjustment (S736).

The foregoing a) and b) can prevent an unexpected video or an unsuitable 3D video caused due to the double parallax adjustment from being displayed.

### <6. Application example>

The embodiment of the present disclosure has been described above. According to the image processing described in the foregoing "4. Image processing for 2D display," the black band region is displayed in the end portion of the image. Accordingly, image processing performed for 2D display so that the black band region is not displayed on a screen will be described as an application example.

Since the maximum parallax adjustment amount, that is, the width of the shift amount by a recording device as in the imaging device 20, is generally unique, data indicating the maximum parallax adjustment amount is assumed to be disposed in the parallax adjustment metadata. Also, an example in which the maximum parallax adjustment amount of the L image (1920×1080) is ±50 pixels will be considered below.

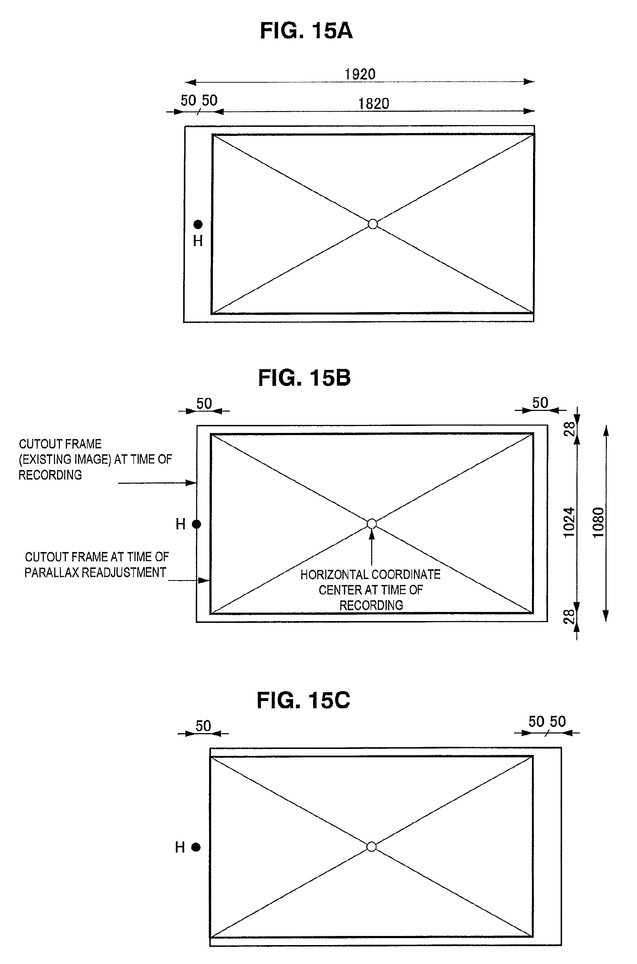

FIG. 15 is an explanatory diagram illustrating cutout of an image according to an application example. In FIG. 15, a black circle H indicates the horizontal coordinate origin before the parallax adjustment at the time of the recording and a white circle indicates the horizontal coordinate center (a center of the angle of view and 960 pixels from the horizontal coordinate origin) when an image of 1920 pixels is recorded from the horizontal coordinate origin. Also, in FIG. 15 an image in which a region indicated by a dashed line is recorded is illustrated and an image region cut out by a thick line is illustrated.

Specifically, in FIG. 15A, since the parallax adjustment of -50 pixels is performed on the L image, there is an image region indicated by the dashed line from the position of the 50 pixels to the outside (left side) from the horizontal coordinate origin H before the parallax adjustment. Also, in FIG. 15B, since the parallax adjustment is not performed on the L image, the horizontal coordinate origin at the time of the recording matches the horizontal end of the image region indicated by the dashed line. Also, in FIG. 15C, since the parallax adjustment of 50 pixels is performed on the L image, there is an image region indicated by the dashed line from the position of the 50 pixels to the inside (right side) from the horizontal coordinate origin H before the parallax adjustment.

The parallax readjustment unit 430 cuts out a common and maximum region inside the image indicated by the dashed line. Here, since the maximum parallax adjustment amount is ±50 pixels, a region of 1920-50×2 = 1820 pixels can be cut out in the horizontal direction. That is, this region is a range of the angle of view existing when any parallax adjustment is performed. Therefore, when this region is typically cut out, the horizontal center of the cutout image can be maintained at the horizontal coordinate center at the time of the recording without reception of an influence of the parallax adjustment.

Further, when 1820 horizontal pixels are cut out, the number of vertical lines is 1820x1080/1920 = 1024 in consideration of an aspect ratio. Therefore, cutout ranges in the vertical direction are regions inside the image regions of 28 lines to which 1080-1024 = 56 lines are equally allocated vertically.

The cutout ranges of the images in consideration of the aspect ratio are indicated by the solid lines in FIGS. 15A to 15C. In FIG. 15A, since the parallax adjustment amount Xi/2 = -50, the cutout start position in the horizontal direction is 100 pixels by addition of a value (50) by which the parallax adjustment is cancelled + the absolute value (50) of the maximum parallax adjustment amount. In FIG. 15C, since the parallax adjustment amount Xi/2 = 50, the cutout start position in the horizontal direction is 0 pixels by addition of a value (-50) by which the parallax adjustment is cancelled + the absolute value (50) of the maximum parallax adjustment amount. In FIG. 15B, since the parallax adjustment amount Xi/2 = 0, the cutout start position in the horizontal direction is 50 pixels by addition of a value (0) by which the parallax adjustment is cancelled + the absolute value (50) of the maximum parallax adjustment amount.

Even when the parallax adjustment amounts are different, the parallax readjustment unit 430 can likewise calculate the cutout start position in the horizontal direction by calculating (-1) x the parallax adjustment amount + the absolute value of the maximum parallax adjustment amount.

The example in which the maximum parallax adjustment amounts are the same value right and left has been described above. However, even when the maximum adjustment amounts are different right and left, the process can be performed likewise. For example, the parallax readjustment unit 430 may obtain a common region which can be cut out in the cases of the maximum adjustment amount to the left and the maximum adjustment amount to the right and the cutout can be performed with equal sizes on the right and the left with reference to the horizontal coordinate center before the parallax adjustment so that the horizontal coordinate center before the parallax adjustment becomes the horizontal center of the image after the cutout inside the region.

Further, the parallax readjustment unit 430 has a function of an expansion processing unit expanding the image region cut out in this way to a display size of 1920×1080.

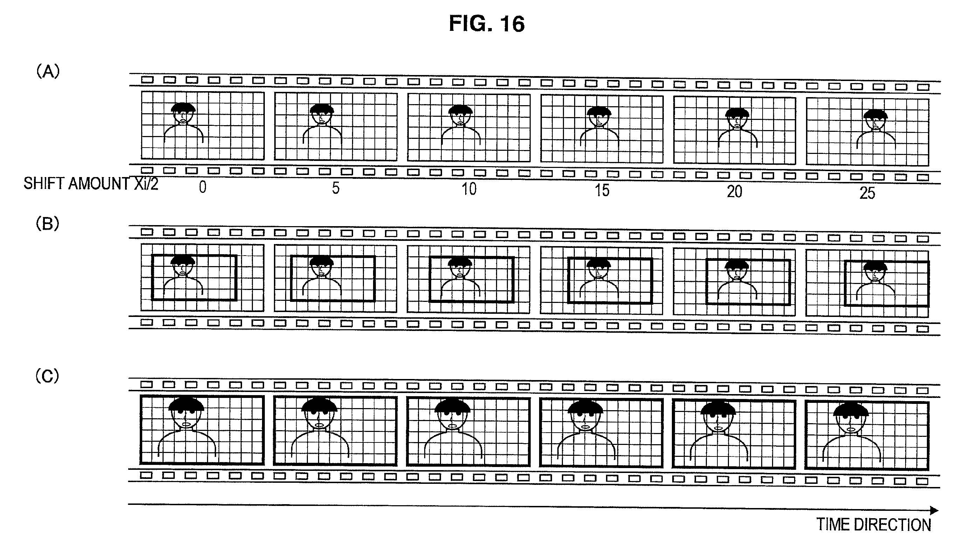

For example, when the parallax adjustment is performed on the L image, as illustrated in FIG. 16A, the parallax readjustment unit 430 cuts out a common region which can be cut out in the cases of the maximum adjustment amount to the left and the maximum adjustment amount to the right, as illustrated in FIG. 16B. Then, as illustrated in FIG. 16C, the parallax readjustment unit 430 expands the size of the cutout image region to a display size.

In this configuration, the image center before the parallax adjustment matches the image center at the time of display. Therefore, even when the L image subjected to the parallax adjustment is used, the 2D display with no black band or swing can be realized.

### <7. Conclusion>

According to the embodiments of the present disclosure, as described above, it is possible to resolve adverse effects by the parallax adjustment of the L image and the R image. For example, according to the embodiment of the present disclosure, when the 2D display is performed using the L image or the R image subjected to the parallax adjustment, the parallax adjustment subjected to the L image or the R image can be cancelled, and thus the swing of the image can be suppressed. Also, by associating the parallax adjustment metadata indicating the content of the parallax adjustment with the LR image pair, it is possible to realize diverse processes using the positional relation between the L image and the R image before the parallax adjustment. Also, even when the parallax adjustment is not performed, countermeasures can be performed using the format of common parallax adjustment metadata.

The preferred embodiments of the present disclosure have been described in detail with reference to the appended drawings, but the technical scope of the present disclosure is not limited to the example. It should be apparent to those skilled in the art of the technical fields of the present disclosure that various modification examples or correction examples can be made within the scope of the technical spirit and essence described in the claims, and the modification examples or the correction examples are, of course, construed to pertain to the technical scope of the present disclosure.

For example, the parallax readjustment has been described above as an example of the use of the parallax adjustment metadata, but the use of the parallax adjustment metadata is not limited to the parallax readjustment. The parallax adjustment metadata can be used in diverse processes using the center positions or the horizontal positions of the L image and the R image before the parallax adjustment.

The steps of the processes of the imaging device 20, the reproduction device 30, and the display device 40 according to the present specification may not necessarily be processed chronologically in the orders described in the flowcharts. For example, the steps of the processes of the imaging device 20, the reproduction device 30, and the display device 40 may be processed in orders different from the orders described in the flowcharts or may be processed in parallel.

A computer program causing hardware such as the CPU, the ROM, the RAM included in the imaging device 20, the reproduction device 30, and the display device 40 to perform the same functions as the configurations of the imaging device 20, the reproduction device 30, and the display device 40 described above can be generated. Also, a storage medium storing the computer program is also provided.

Additionally, the present technology may also be configured as below.
(1)
   A parallax adjustment device including:
   a parallax adjustment unit configured to perform parallax adjustment on a left-eye image and a right-eye image that are obtained by imaging; and
   a data processing unit configured to associate metadata regarding the parallax adjustment with image data including the left-eye image and the right-eye image.
(2)
   The parallax adjustment device according to (1), wherein the parallax adjustment unit performs the parallax adjustment through a shift process on the left-eye image, a shift process on the right-eye image, or a shift process on both of the left-eye image and the right-eye image.
(3)
   The parallax adjustment device according to (1) or (2), wherein the metadata includes data indicating whether the parallax adjustment is performed.
(4)
   The parallax adjustment device according to (3), wherein the metadata includes data indicating a shift amount of the left-eye image and a shift amount of the right-eye image.
(5)
   The parallax adjustment device according to (4), wherein, when the parallax adjustment is not performed, a data portion for indicating the shift amounts in the metadata includes data indicating other information.
(6)
   The parallax adjustment device according to (2), wherein the metadata includes data indicating a target image subjected to the parallax adjustment by the parallax adjustment unit among the left-eye image and the right-eye image and data indicating a shift amount of the target image.
(7)
   The parallax adjustment device according to (1),
   wherein the parallax adjustment unit perform the parallax adjustment through a shift process on both of the left-eye image and the right-eye image, and
   wherein the metadata includes data indicating whether the parallax adjustment is performed and data indicating shift amounts of the left-eye image and the right-eye image.
(8)
   An image processing device including:
   a data acquisition unit configured to acquire image data including a left-eye image and a right-eye image and metadata regarding parallax adjustment on the left-eye image and the right-eye image, which is associated with the image data; and
   an image extraction unit configured to extract one region of the left-eye image or the right-eye image based on the metadata.
(9)
   The image processing device according to (8),
   wherein the metadata includes data indicating whether the parallax adjustment is performed on the left-eye image and the right-eye image, and
   wherein the image extraction unit performs the extraction when the metadata indicates that the parallax adjustment is performed, and does not perform the extraction when the metadata indicates that the parallax adjustment is not performed.
(10)
   The image processing device according to (8) or (9),
   wherein the parallax adjustment includes a shift process on the left-eye image, a shift process on the right-eye image, or a shift process on both of the left-eye image and the right-eye image,
   wherein the metadata includes data indicating a shift amount of the left-eye image and a shift amount of the right-eye image, and
   wherein the image extraction unit extracts a region according to the shift amount of the left-eye image or the right-eye image indicated by the metadata, from the left-eye image or the right-eye image.
(11)
   The image processing device according to (8),
   wherein the parallax adjustment is a shift process on both of the left-eye image and the right-eye image,
   wherein the metadata includes data indicating whether the parallax adjustment is performed and data indicating shift amounts of the left-eye image and the right-eye image, and
   wherein the image extraction unit extracts a region according to the shift amounts of the left-eye image and the right-eye image indicated by the metadata, from the left-eye image or the right-eye image.
(12)
   The image processing device according to (10) or (11),
   wherein the extraction unit extracts, from the left-eye image or the right-eye image, a region with a length equal to or less than a horizontal-direction length obtained by subtracting a width of the shift amounts of the left-eye image and the right-eye image from a horizontal-direction length of the left-eye image or the right-eye image, and
   wherein the image processing device further includes
   an expansion processing unit configured to expand the region extracted by the image extraction unit.
(13)
   A data format including:
   metadata regarding parallax adjustment on a left-eye image and a right-eye image obtained through imaging; and
   image data including the left-eye image and the right-eye image.(14)
   A parallax adjustment method including:
      performing parallax adjustment on a left-eye image and a right-eye image that are obtained by imaging; and
      associating metadata regarding the parallax adjustment with image data including the left-eye image and the right-eye image.
(15)
   An image processing method including:
   acquiring image data including a left-eye image and a right-eye image and metadata regarding parallax adjustment on the left-eye image and the right-eye image, which is associated with the image data; and
   extracting one region of the left-eye image or the right-eye image based on the metadata.
(16)
   A program for causing a computer to function as:
   a parallax adjustment unit configured to perform parallax adjustment on a left-eye image and a right-eye image that are obtained by imaging; and
   a data processing unit configured to associate metadata regarding the parallax adjustment with image data including the left-eye image and the right-eye image.
(17)
   A program for causing a computer to function as:
   a data acquisition unit configured to acquire image data including a left-eye image and a right-eye image and metadata regarding parallax adjustment on the left-eye image and the right-eye image, which is associated with the image data; and
   an image extraction unit configured to extract one region of the left-eye image or the right-eye image based on the metadata.

### Reference Signs List

- 20: Imaging device
- 22: Imaging unit
- 24: Imaging optical system
- 26: Image sensor
- 28: Recording medium
- 30: Reproduction device
- 40: Display device
- 210: Image processing unit
- 220: Parallax adjustment unit
- 230: Encoding processing unit
- 240: Recording unit
- 250: Display unit
- 310: Reading unit
- 320: Decoding processing unit
- 330: Parallax readjustment unit
- 340: Communication processing unit
- 410: Reading unit
- 412: Communication processing unit
- 420: Decoding processing unit
- 430: Parallax readjustment unit
- 440: Display unit

## Claims

1. A parallax adjustment device comprising:
a parallax adjustment unit configured to perform parallax adjustment on a left-eye image and a right-eye image that are obtained by imaging; and
a data processing unit configured to associate metadata regarding the parallax adjustment with image data including the left-eye image and the right-eye image.

2. The parallax adjustment device according to claim 1, wherein the parallax adjustment unit performs the parallax adjustment through a shift process on the left-eye image, a shift process on the right-eye image, or a shift process on both of the left-eye image and the right-eye image.

3. The parallax adjustment device according to claim 1 or 2, wherein the metadata includes data indicating whether the parallax adjustment is performed.

4. The parallax adjustment device according to claim 3, wherein the metadata includes data indicating a shift amount of the left-eye image and a shift amount of the right-eye image.

5. The parallax adjustment device according to claim 4, wherein, when the parallax adjustment is not performed, a data portion for indicating the shift amounts in the metadata includes data indicating other information.

6. The parallax adjustment device according to claim 2, wherein the metadata includes data indicating a target image subjected to the parallax adjustment by the parallax adjustment unit among the left-eye image and the right-eye image and data indicating a shift amount of the target image.

7. The parallax adjustment device according to claim 1,
wherein the parallax adjustment unit perform the parallax adjustment through a shift process on both of the left-eye image and the right-eye image, and
wherein the metadata includes data indicating whether the parallax adjustment is performed and data indicating shift amounts of the left-eye image and the right-eye image.

8. An image processing device comprising:
a data acquisition unit configured to acquire image data including a left-eye image and a right-eye image and metadata regarding parallax adjustment on the left-eye image and the right-eye image, which is associated with the image data; and
an image extraction unit configured to extract one region of the left-eye image or the right-eye image based on the metadata.

9. The image processing device according to claim 8,
wherein the metadata includes data indicating whether the parallax adjustment is performed on the left-eye image and the right-eye image, and
wherein the image extraction unit performs the extraction when the metadata indicates that the parallax adjustment is performed, and does not perform the extraction when the metadata indicates that the parallax adjustment is not performed.

10. The image processing device according to claim 8,
wherein the parallax adjustment includes a shift process on the left-eye image, a shift process on the right-eye image, or a shift process on both of the left-eye image and the right-eye image,
wherein the metadata includes data indicating a shift amount of the left-eye image and a shift amount of the right-eye image, and
wherein the image extraction unit extracts a region according to the shift amount of the left-eye image or the right-eye image indicated by the metadata, from the left-eye image or the right-eye image.

11. The image processing device according to claim 8,
wherein the parallax adjustment is a shift process on both of the left-eye image and the right-eye image,
wherein the metadata includes data indicating whether the parallax adjustment is performed and data indicating shift amounts of the left-eye image and the right-eye image, and
wherein the image extraction unit extracts a region according to the shift amounts of the left-eye image and the right-eye image indicated by the metadata, from the left-eye image or the right-eye image.

12. The image processing device according to claim 10,
wherein the extraction unit extracts, from the left-eye image or the right-eye image, a region with a length equal to or less than a horizontal-direction length obtained by subtracting a width of the shift amounts of the left-eye image and the right-eye image from a horizontal-direction length of the left-eye image or the right-eye image, and
wherein the image processing device further includes
an expansion processing unit configured to expand the region extracted by the image extraction unit.

13. A data format comprising:
metadata regarding parallax adjustment on a left-eye image and a right-eye image obtained through imaging; and
image data including the left-eye image and the right-eye image.
